# EUROPEAN PATENT APPLICATION

(11) **EP 4 787 108 A1**
(43) Date of publication of application: **05.08.2026**
(21) Application number: 26154963.8
(22) Date of filing: 29.01.2026
(51) Int. Cl.: G05D 1/249, G05D 1/225, G05D 1/617, G05D 109/10, G05D 107/70, G05D 105/45

(54) **CONTROL SYSTEM**

(30) Priority: 03.02.2025 JP 2025015951; 04.12.2025 JP 2025231135
(71) Applicant: Toyota Jidosha Kabushiki Kaisha, Toyota-shi, Aichi-ken 471-8571 (JP)
(72) Inventor: KATO, Kohei, Toyota-shi, Aichi-ken, 471-8571 (JP); UEDA, Kazuhiko, Toyota-shi, Aichi-ken, 471-8571 (JP); KANOU, Takeshi, Toyota-shi, Aichi-ken, 471-8571 (JP); TAKAHASHI, Satoshi, Toyota-shi, Aichi-ken, 471-8571 (JP); IWAHORI, Kento, Toyota-shi, Aichi-ken, 471-8571 (JP)
(74) Representative: TBK

(57) **Abstract**

A control system controls a vehicle capable of running by unmanned driving, and comprises: an acquisition unit that acquires step information about a particular step that is a step among steps present on a running route of the vehicle and determined in advance as a step which the vehicle is not to mount; a detection unit that detects the presence of the particular step at a destination of travel of the vehicle by using the step information; and a controller that controls the vehicle in such a way as to reduce a likelihood of the vehicle mounting the particular step if the detection unit detects the presence of the particular step at a destination of travel of the vehicle.

## Description

### BACKGROUND

### FIELD

The present disclosure relates to a control system.

### RELATED ART

There is a known technique by which a vehicle is caused to run by unmanned driving in a factory where the vehicle is manufactured Japanese Translation of PCT International Application Publication No. JP-T-2017-538619, for example).

### PRIOR ART LITERATURES

### PATENT LITERATURES

Patent Literature 1: Japanese Patent Application Publication (Translation of PCT Application) No. 2017-538619

If a step which a vehicle is not to mount is present on a running route of the vehicle and if the vehicle continues to run toward the step, the vehicle has a risk of mounting the step.

### SUMMARY

The present disclosure is feasible in the following aspects.
(1) According to one aspect of the present disclosure, a control system is provided. The control system controls a vehicle capable of running by unmanned driving, and comprises: an acquisition unit that acquires step information about a particular step that is a step among steps present on a running route of the vehicle and determined in advance as a step which the vehicle is not to mount; a detection unit that detects the presence of the particular step at a destination of travel of the vehicle by using the step information; and a controller that controls the vehicle in such a way as to reduce a likelihood of the vehicle mounting the particular step if the detection unit detects the presence of the particular step at a destination of travel of the vehicle. According to this aspect, it is possible to prevent the vehicle from running continuously toward the particular step. This makes it possible to reduce a likelihood of the vehicle mounting the particular step.
(2) In the above aspect, the controller may perform at least one of: (i) controlling of a steering angle of the vehicle in such a way as to cause the vehicle to run without mounting the particular step if the particular step is a step generated by a stationary item defining a course of the vehicle; (ii) controlling of an acceleration of the vehicle in such a way as to stop the vehicle in front of the particular step if the particular step is a step generated by a stationary item defining a stop location of the vehicle; and (iii) controlling of at least one of the steering angle of the vehicle and the acceleration of the vehicle in such a way as to avoid contact of the vehicle with the particular step if the particular step is a step generated by a moving item present around the vehicle. According to this aspect, it is possible to reduce a likelihood of the vehicle mounting the particular step by moving the vehicle farther from the particular step or stopping the vehicle in front of the particular step, for example.
(3) In the above aspect, the step information may include item location information indicating the location of an item generating the particular step, the acquisition unit may further acquire vehicle location information indicating the location of the vehicle, and if a distance between the item and the vehicle identified by using the item location information and the vehicle location information is within a predetermined distance, the detection unit may detect the presence of the particular step at a destination of travel of the vehicle. According to this aspect, it is possible to detect the presence of the particular step at a destination of travel of the vehicle in response to the distance between the item generating the particular step and the vehicle.
(4) In the above aspect, the particular step may be a step generated by a stationary item installed in a work place where a working process is performed onto the vehicle, the step information may include step process information indicating the working process to be performed in the work place where the particular step is present, the acquisition unit may further acquire implemented process information indicating the working process being performed onto the vehicle, and if the working process identified from the implemented process information agrees with the working process identified from the step process information, the detection unit may detect the presence of the particular step at a destination of travel of the vehicle. According to this aspect, movement of the vehicle closer to the particular step is detected by taking advantage of the point that the working process where the stationary item generating the particular step is present is known, making it possible to a reduce a likelihood of the vehicle mounting the particular step.
(5) In the above aspect, the detection unit may further detect that the vehicle has mounted the particular step, and if the detection unit detects that the vehicle has mounted the particular step, the controller may control the vehicle in such a way as to evacuate the vehicle from over the particular step. According to this aspect, even if the vehicle has mounted the particular step, it is possible to evacuate the vehicle from over the particular step.

The present disclosure is feasible in various aspects other than the control system described above. For example, the present disclosure may be realized in aspects including a vehicle and a server capable of realizing at least some of the functions of the control system, a method of controlling the vehicle by the control system, a computer program to realize the control method, and a non-transitory recording medium in which the computer program is recorded.

### BRIEF DESCRIPTION OF THE DRAWINGS

Fig. 1 is a conceptual view of a control system according to a first embodiment;
Fig. 2 is a block diagram showing the configuration of the control system;
Fig. 3 is a flowchart showing a processing procedure of running control over a vehicle according to the first embodiment;
Fig. 4 is a flowchart showing a control method according to the first embodiment;
Fig. 5 is a flowchart showing a control method according to a second embodiment;
Fig. 6 is a flowchart showing a control method according to a third embodiment;
Fig. 7 is an explanatory view showing a schematic configuration of a control system according to a fourth embodiment; and
Fig. 8 is a flowchart showing a processing procedure of running control over a vehicle according to the fourth embodiment.

### DETAILED DESCRIPTION

### A. First Embodiment:

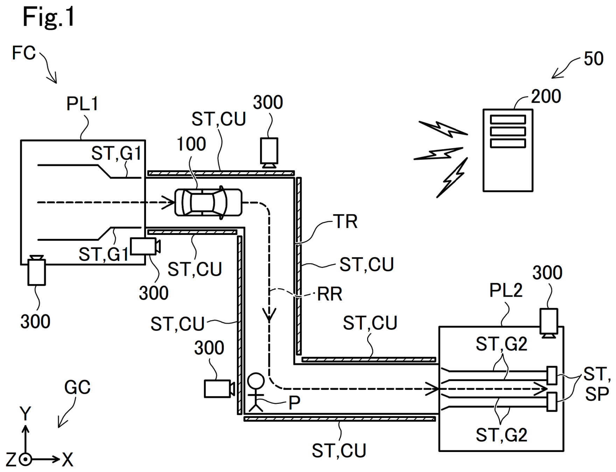

Fig. 1 is a conceptual view of a control system 50 according to a first embodiment. The control system 50 includes one or more vehicles 100, a server 200, and one or more external sensors 300.

The vehicle 100 may be a vehicle which runs on wheels or a vehicle which runs on a caterpillar system, and is a passenger car, a truck, a bus, a two-wheel vehicle, a four-wheel vehicle, or a vehicle for construction, for example. The vehicle 100 includes a battery electric vehicle (BEV), a gasoline vehicle, a hybrid vehicle, and a fuel cell vehicle.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In the present embodiment, the control system 50 is used in a factory FC where the vehicle 100 is manufactured by performing a plurality of manufacturing processes. A reference coordinate system in the factory FC is a global coordinate system GC, and an arbitrary location in the factory FC may be expressed by X, Y, and Z coordinates in the global coordinate system GC. The factory FC has a first place PL1 and a second place PL2. Each of the first place PL1 and the second place PL2 is a place for implementation of one or more real processes such as an assembly process and an inspection process of the plurality of manufacturing processes, for example. The first place PL1 and the second place PL2 are connected to each other via a track TR allowing the vehicle 100 to run therethrough. The vehicle 100 moves from the first place PL1 to the second place PL2 through the track TR by unmanned driving. A conveyance process within the plurality of manufacturing processes is performed on the track TR by which the vehicle 100 is conveyed from the first place PL1 to the second place PL2. The configuration of the factory FC is not limited to the above.

The factory FC is equipped with a plurality of the external sensors 300 installed along the track TR. The location of each external sensor 300 in the factory FC is adjusted in advance. The external sensor 300 is a sensor located external to the vehicle 100. In the present embodiment, the external sensor 300 is a sensor that catches the vehicle 100 from outside the vehicle 100. The external sensor 300 includes a communication device (not shown in the drawings), and is capable of communicating with another device such as the server 200 via wired communication or radio communication. More specifically, the external sensor 300 is composed of a camera. The camera as the external sensor 300 captures an image of the vehicle 100, and outputs the captured image as detection result.

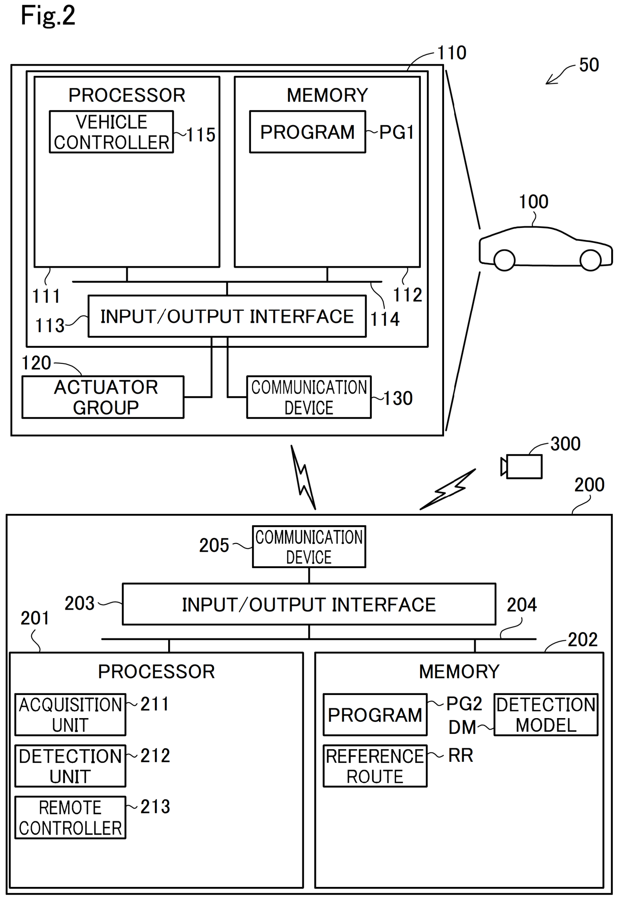

Fig. 2 is a block diagram showing the configuration of the control system 50. The vehicle 100 includes a vehicle control device 110 for controlling each part of the vehicle 100, an actuator group 120 including one or more actuators to be driven under control from the vehicle control device 110, and a communication device 130 for communicating with an external device such as the server 200 via radio communication. The actuator group 120 includes an actuator of a driving device for accelerating the vehicle 100, an actuator of a steering device for changing a traveling direction of the vehicle 100, and an actuator of a braking device for decelerating the vehicle 100.

The vehicle control device 110 is configured using a computer including a processor 111, a memory 112, an input/output interface 113, and an internal bus 114. The processor 111, the memory 112, and the input/output interface 113 are connected via the internal bus 114 in a manner allowing bidirectional communication therebetween. The actuator group 120 and the communication device 130 are connected to the input/output interface 113. The processor 111 executes a program PG1 stored in the memory 112 to function as a vehicle controller 115.

The vehicle controller 115 causes the vehicle 100 to run by controlling the actuator group 120. The vehicle controller 115 is capable of causing the vehicle 100 to run by controlling the actuator group 120 by using a running control signal received from the server 200. The running control signal is a control signal for causing the vehicle 100 to run. In the present embodiment, the running control signal includes an acceleration and a steering angle of the vehicle 100 as parameters. In other embodiments, the running control signal may include a speed of the vehicle 100 as a parameter instead of or in addition to an acceleration of the vehicle 100. The running control signal may also include a parameter for changing the shift location of the vehicle 100 or a parameter for controlling the motion of a hydraulic brake of the vehicle 100 instead of or in addition to an acceleration, a speed, or a steering angle of the vehicle 100.

The server 200 is configured using a computer including a processor 201, a memory 202, an input/output interface 203, and an internal bus 204. The processor 201, the memory 202, and the input/output interface 203 are connected via the internal bus 204 in a manner allowing bidirectional communication therebetween. A communication device 205 for communicating with each type of device external to the server 200 is connected to the input/output interface 203. The communication device 205 is capable of communicating with the vehicle 100 via radio communication and capable of communicating with each external sensor 300 via wired communication or radio communication. The processor 201 executes a program PG2 stored in the memory 202 to function as an acquisition unit 211, a detection unit 212, and a remote controller 213.

The acquisition unit 211 acquires various types of information including step information. The step information is information about a particular step ST that is a step among steps present on a running route of the vehicle 100 and determined in advance as a step which the vehicle 100 is not to mount. The particular step ST is generated by a stationary item installed in the manufacturing place PL1, PL2, or TR where a manufacturing process is performed onto the vehicle 100, for example, which is a stationary item defining a course or a stop location of the vehicle 100. The stationary item mentioned herein may either be a fixed item fixed on a road surface or a portable item changeable in its location as appropriate on the road surface. As shown in Fig. 1, the stationary item defining the course of the vehicle 100 includes a tire guide G1 regulating a running location of the vehicle 100 entirely, a tire guide G2 regulating the location of a wheel, and a curb CU provided along the track TR, for example. The stationary item defining the stop location of the vehicle 100 is a movable or fixed tire stopper SP functioning as a wheel stopper, for example. The particular step ST may be a step generated by a moving item present around the vehicle 100 such as a step generated by a safety shoe put on a feet of a worker P involved in manufacture of the vehicle 100.

In the present embodiment, the acquisition unit 211 shown in Fig. 2 acquires the step information including item location information indicating the location of an item generating the particular step ST, and vehicle location information indicating the location of the vehicle 100. In doing this, the acquisition unit 211 acquires the item location information and the vehicle location information by using detection result from the external sensor 300, for example. The acquisition unit 211 may acquire the item location information and the vehicle location information by using detection result from an internal sensor mounted on the vehicle 100. If an item generating the particular step ST is a stationary item, the acquisition unit 211 may acquire the item location information by referring to a map stored in advance in the memory 202, which is a map expressing the location of each stationary item in the factory FC by the global coordinate system GC.

Using the step information, the detection unit 212 detects the presence of the particular step ST at a destination of forward movement or backward movement of the vehicle 100, namely at a destination of travel of the vehicle 100. In the present embodiment, the detection unit 212 identifies a distance between an item generating the particular step ST and the vehicle 100 by using the item location information and the vehicle location information. If the identified distance is within a predetermined distance, the detection unit 212 detects the presence of the particular step ST at the destination of travel of the vehicle 100.

The remote controller 213 acquires detection result from the sensor, generates a running control signal for controlling the actuator group 120 of the vehicle 100 by using the detection result, and transmits the running control signal to the vehicle 100, thereby causing the vehicle 100 to run by remote control. If the detection unit 212 detects the presence of the particular step ST at a destination of travel of the vehicle 100 during a period when such remote control is being performed, the remote controller 213 controls the vehicle 100 in such a way as to reduce a likelihood of the vehicle 100 mounting the particular step ST.

If the detection unit 212 detects the presence of the particular step ST at a destination of travel of the vehicle 100 and if the particular step ST is a step generated by a stationary item defining a course of the vehicle 100, for example, the remote controller 213 behaves in the following manner. The remote controller 213 determines a steering angle of the vehicle 100 in such a way as to cause the vehicle 100 to run along the particular step ST without mounting the particular step ST, and generates a running control signal including the determined steering angle as a parameter. In other words, the remote controller 213 changes a steering angle to be included as a parameter in the running control signal from a steering angle in a running control signal transmitted last time in such a way that the vehicle 100 will travel in a direction in which the vehicle 100 is unlikely to mount the particular step ST. The remote controller 213 controls a steering angle of the vehicle 100 in this way to move the vehicle 100 farther from the particular step ST, thereby reducing a likelihood of the vehicle 100 mounting the particular step ST.

If the detection unit 212 detects the presence of the particular step ST at a destination of travel of the vehicle 100 and if the particular step ST is a step generated by a stationary item defining a stop location of the vehicle 100, the remote controller 213 behaves in the following manner. The remote controller 213 determines an acceleration of the vehicle 100 in such a way as to stop the vehicle 100 in front of the particular step ST, and generates a running control signal including the determined acceleration as a parameter. In other words, the remote controller 213 reduces an acceleration of the vehicle 100. Specifically, the remote controller 213 sets an acceleration to be included as a parameter in the running control signal lower than an acceleration in a running control signal transmitted last time in such a way as to increase a deceleration as a negative acceleration of the vehicle 100. The remote controller 213 controls an acceleration of the vehicle 100 in this way to reduce a torque of a motor for running or actuate the hydraulic brake, for example. By doing so, the remote controller 213 stops the vehicle 100 in front of the particular step ST, thereby reducing a likelihood of the vehicle 100 mounting the particular step ST.

If the detection unit 212 detects the presence of the particular step ST at a destination of travel of the vehicle 100 and if the particular step ST is a step generated by a moving item present around the vehicle 100, the remote controller 213 behaves in the following manner. The remote controller 213 determines at least one of a steering angle of the vehicle 100 and an acceleration of the vehicle 100 in such a way as to avoid contact of the vehicle 100 with the particular step ST, and generates a running control signal including the determined steering angle or acceleration as a parameter. The remote controller 213 controls at least one of a steering angle and an acceleration of the vehicle 100 in this way, thereby reducing a likelihood of the vehicle 100 mounting the particular step ST.

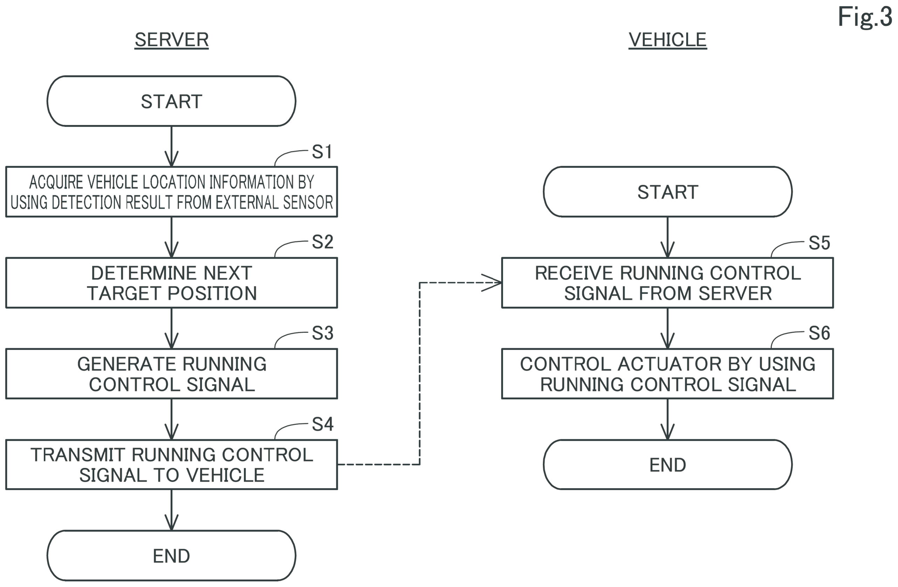

Fig. 3 is a flowchart showing a processing procedure for running control of the vehicle 100 in the first embodiment.

In step S1, the processor 201 of the server 200 acquires vehicle location information by using detection result output from the external sensor 300. The vehicle location information is location information used as a basis for generating a running control signal. In the present embodiment, the vehicle location information includes the location and direction of the vehicle 100 in the global coordinate system GC of the factory FC. More specifically, in step S1, the processor 201 acquires the vehicle location information by using a captured image acquired from the camera as the external sensor 300.

More specifically, in step S1, the processor 201 for example, determines the outer shape of the vehicle 100 from the captured image, calculates the coordinates of a location point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the control system 50 or outside the control system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model DM and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward a determined target location. The processor 201 calculates a running speed of the vehicle 100 from a transition of the location of the vehicle 100, and compares the calculated running speed and a target speed. If the running speed as a whole is lower than the target speed, the processor 201 determines an acceleration in such a way as to accelerate the vehicle 100. If the running speed as a whole is higher than the target speed, the processor 201 determines an acceleration in such a way as to decelerate the vehicle 100. If the vehicle 100 is on a reference route RR, the processor 201 determines a steering angle and an acceleration in such a way as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a way as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the control system 50 in the present embodiment, it becomes possible to move the vehicle 100 without using a transport unit such as a crane or a conveyor.

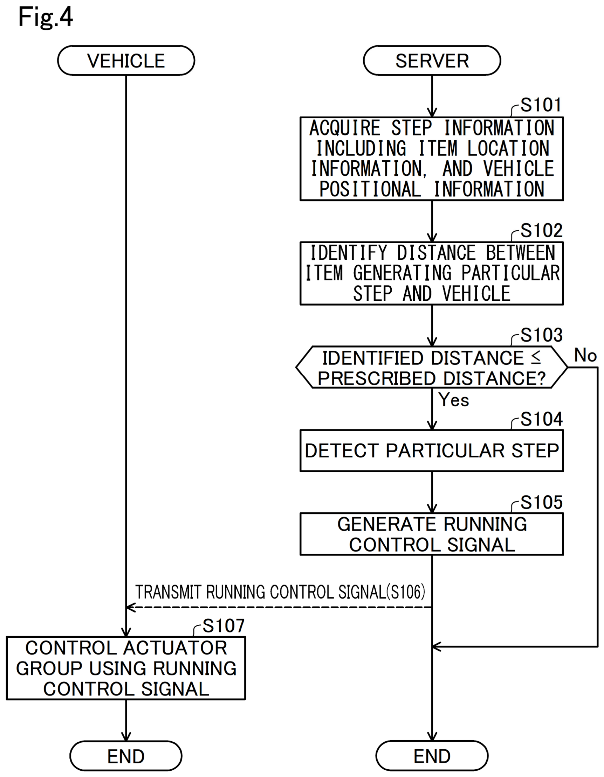

Fig. 4 is a flowchart showing a control method according to the first embodiment. The flow shown in Fig. 4 is repeatedly performed in a predetermined time cycle from a moment when the vehicle 100 starts running by unmanned driving, for example. In step S101, the acquisition unit 211 of the server 200 acquires step information including item location information, and vehicle location information. In step S102, the detection unit 212 of the server 200 identifies a distance between an item generating the particular step ST and the vehicle 100 by using the item location information and the vehicle location information. If the identified distance, specifically, the distance between the item generating the particular step ST and the vehicle 100 is not within a prescribed distance set in advance (step S103: No), the server 200 finishes the present flow. If the distance between the item generating the particular step ST and the vehicle 100 is within the prescribed distance set in advance (step S103: Yes), the detection unit 212 detects the presence of the particular step ST at a destination of travel of the vehicle 100 in step S104. If the detection unit 212 detects the presence of the particular step ST at a destination of travel of the vehicle 100, the remote controller 213 of the server 200 generates a running control signal in step S105 for reducing a likelihood of the vehicle 100 mounting the particular step ST. In step S106, the remote controller 213 transmits the generated running control signal to the vehicle 100. In step S107, the vehicle controller 115 of the vehicle 100 controls the actuator group 120 by using the received running control signal, thereby operating the vehicle 100 at an acceleration or a steering angle expressed in the running control signal.

According to the above first embodiment, if the control system 50 detects the presence of the particular step ST at a destination of travel of the vehicle 100, the control system 50 is capable of controlling the vehicle 100 by remote control in such a way as to reduce a likelihood of the vehicle 100 mounting the particular step ST. In this configuration, it is possible to prevent the vehicle 100 from running continuously toward the particular step ST. This makes it possible to reduce a likelihood of the vehicle 100 mounting the particular step ST.

According to the above first embodiment, if the particular step ST is a step generated by a stationary item defining a course of the vehicle 100, the control system 50 is capable of controlling a steering angle of the vehicle 100 in such a way as to cause the vehicle 100 to run without mounting the particular step ST. This configuration moves the vehicle 100 farther from the particular step ST, making it possible to reduce a likelihood of the vehicle 100 mounting the particular step ST. As a result, the vehicle 100 becomes capable of running along the tire guide G1 or G2, for example.

According to the above first embodiment, if the particular step ST is a step generated by a stationary item defining a stop location of the vehicle 100, the control system 50 is capable of controlling an acceleration of the vehicle 100 in such a way as to stop the vehicle 100 in front of the particular step ST. In this configuration, by reducing a torque of the motor for running or actuating the hydraulic brake, for example, to stop the vehicle 100 in front of the particular step ST, it becomes possible to reduce a likelihood of the vehicle 100 mounting the particular step ST. This allows the vehicle 100 to be stopped in front of the tire stopper SP, for example.

According to the above first embodiment, if the particular step ST is a moving item present around the vehicle 100, the control system 50 is capable of controlling at least one of a steering angle and an acceleration of the vehicle 100 in such a way as to avoid contact of the vehicle 100 with the particular step ST. In this configuration, it is possible to reduce a likelihood of the vehicle 100 mounting the particular step ST by moving the vehicle 100 farther from the particular step ST or stopping the vehicle 100 in front of the particular step ST, for example. This makes it possible to reduce a likelihood of the vehicle 100 mounting a safety shoe worn by the worker P, for example.

The control system 50 may reduce a likelihood of the vehicle 100 mounting the particular step ST by controlling the vehicle 100 by a method other than that described above. The control system 50 may reduce a likelihood of the vehicle 100 mounting the particular step ST by causing the vehicle 100 to perform the same operation uniformly in response to any type of item generating the particular step ST.

According to the above first embodiment, the control system 50 is capable of identifying a distance between an item generating the particular step ST and the vehicle 100 by acquiring item location information and vehicle location information. Then, the control system 50 is capable of detecting the presence of the particular step ST at a destination of travel of the vehicle 100 in response to the distance between the item generating the particular step ST and the vehicle 100. In doing this, if the item generating the particular step ST is a stationary item, the control system 50 is capable of acquiring the item location information by referring to the map stored in advance in the memory 202. In this configuration, movement of the vehicle 100 closer to the particular step ST is detected by taking advantage of the point that the location of the stationary item generating the particular step ST is known in the factory FC, making it possible to reduce a likelihood of the vehicle 100 mounting the particular step ST. The control system 50 is further capable of acquiring item location information by using detection result from the sensor that may be the external sensor 300 or the internal sensor. In this configuration, not only in a case where an item generating the particular step ST is a stationary item but also in a case where the item is a moving item, movement of the vehicle 100 closer to the particular step ST is detected to allow reduction in a likelihood of the vehicle 100 mounting the particular step ST.

### B. Second Embodiment:

In many cases, a place of installation of a stationary item generating the particular step ST is determined in advance in the factory FC. In this regard, if the particular step ST is a step generated by a stationary item installed in the manufacturing place PL1, PL2, or TR, the following behaviors are performed in the present embodiment. The acquisition unit 211 acquires step information including step process information, and implemented process information. The step process information is information indicating a manufacturing process to be performed in the manufacturing place PL1, PL2, or TR where the particular step ST is present. The implemented process information is information indicating a manufacturing process being performed currently on the vehicle 100. The acquisition unit 211 acquires the step process information by referring to a database stored in advance in the memory 202, and acquires the implemented process information by communicating with a manufacturing facility (not shown in the drawings) installed in the manufacturing place PL1, PL2, or TR or with the external sensor 300, for example. If the manufacturing process identified from the implemented process information agrees with the manufacturing process identified from the step process information, the detection unit 212 detects the presence of the particular step ST at a destination of travel of the vehicle 100. The function of the remote controller 213 is the same as that in the first embodiment.

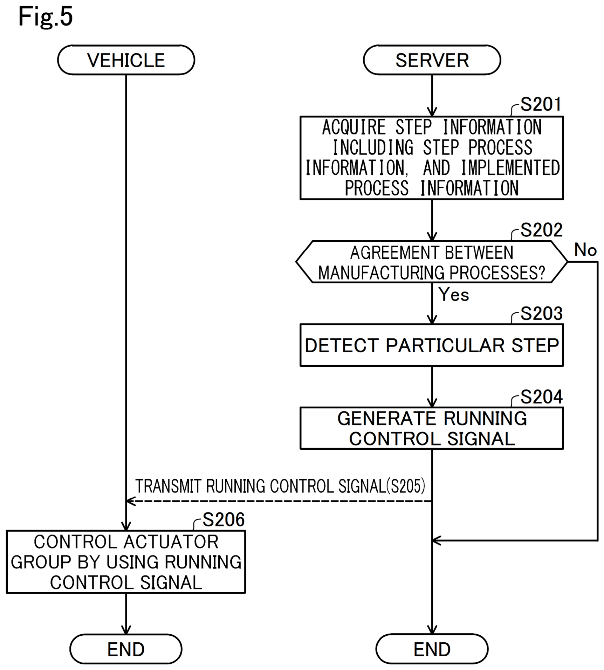

Fig. 5 is a flowchart showing a control method according to the second embodiment. The flow shown in Fig. 5 is repeatedly performed in a predetermined time cycle from a moment when the vehicle 100 starts running by unmanned driving, for example. In step S201, the acquisition unit 211 of the server 200 acquires step information including step process information, and implemented process information. If a manufacturing process identified from the implemented process information does not agree with a manufacturing process identified from the step process information (step S202: No), the server 200 finishes the present flow. If the manufacturing process identified from the implemented process information agrees with the manufacturing process identified from the step process information (step S202: Yes), the detection unit 212 of the server 200 detects the presence of the particular step ST at a destination of travel of the vehicle 100 in step S203. If the detection unit 212 detects the presence of the particular step ST at a destination of travel of the vehicle 100, the remote controller 213 of the server 200 generates a running control signal in step S204 for reducing a likelihood of the vehicle 100 mounting the particular step ST. In step S205, the remote controller 213 transmits the generated running control signal to the vehicle 100. In step S206, the vehicle controller 115 of the vehicle 100 controls the actuator group 120 by using the received running control signal, thereby operating the vehicle 100 at an acceleration or a steering angle expressed in the running control signal.

According to the above second embodiment, the control system 50 is capable of detecting the presence of the particular step ST at a destination of travel of the vehicle 100 in response to a manufacturing process being performed onto the vehicle 100. In this configuration, movement of the vehicle 100 closer to the particular step ST is detected by taking advantage of the point that a manufacturing process where a stationary item generating the particular step ST is present is known in the factory FC, making it possible to a reduce a likelihood of the vehicle 100 mounting the particular step ST.

### C. Third Embodiment:

If the vehicle 100 has mounted the particular step ST for some reason even though control for reducing a likelihood of the vehicle 100 mounting the particular step ST has been performed as in each of the above embodiments, it is preferable to evacuate the vehicle 100 from over the particular step ST. If the vehicle 100 has mounted a safety shoe of the worker P, for example, it is preferable to evacuate the vehicle 100 from over the safety shoe of the worker P by controlling the vehicle 100 in such a way as to cause the vehicle 100 to pass over the safety shoe of the worker P or by controlling the vehicle 100 in such a way as to return the vehicle 100 to a location before mounting the safety shoe, for example. If the vehicle 100 has mounted the tire stopper SP, it is preferable to evacuate the vehicle 100 from over the tire stopper SP and locate the vehicle 100 at a stop location defined by the tire stopper SP by controlling the vehicle 100 in such a way as to return the vehicle 100 to a location before mounting the tire stopper SP, for example. In the present embodiment, the control system 50 controls the vehicle 100 in the following manner.

The detection unit 212 further detects that the vehicle 100 has mounted the particular step ST. The detection unit 212 detects that the vehicle 100 has mounted the particular step ST by detecting contact between the vehicle 100 and the particular step ST from outside the vehicle 100 by using detection result from the external sensor 300, for example.

If the detection unit 212 detects that the vehicle 100 has mounted the particular step ST, the remote controller 213 controls the vehicle 100 in such a way as to evacuate the vehicle 100 from the particular step ST. If the detection unit 212 detects that the vehicle 100 moving forward has mounted the particular step ST generated by a moving item, for example, the remote controller 213 behaves in the following manner. In order to cause the vehicle 100 to pass over the moving item, the remote controller 213 generates a running control signal for setting the shift location of the vehicle 100 to the neutral range and releasing the hydraulic brake, for example. By causing the vehicle 100 to pass over the particular step ST in this way, the remote controller 213 evacuates the vehicle 100 from over the particular step ST. If the detection unit 212 detects that the vehicle 100 has mounted the particular step ST, the remote controller 213 may behave in the following manner. In order to generate a creep torque, the remote controller 213 may generate a running control signal for setting the shift location of the vehicle 100 to the reverse range and loosening the hydraulic brake, for example. The remote controller 213 may evacuate the vehicle 100 from over the particular step ST by moving the vehicle 100 slightly backward at an extremely low speed in this way. The remote controller 213 may evacuate the vehicle 100 from over the particular step ST by generating a running control signal for setting the shift location of the vehicle 100 to the neutral range and releasing the hydraulic brake to move the vehicle 100 backward.

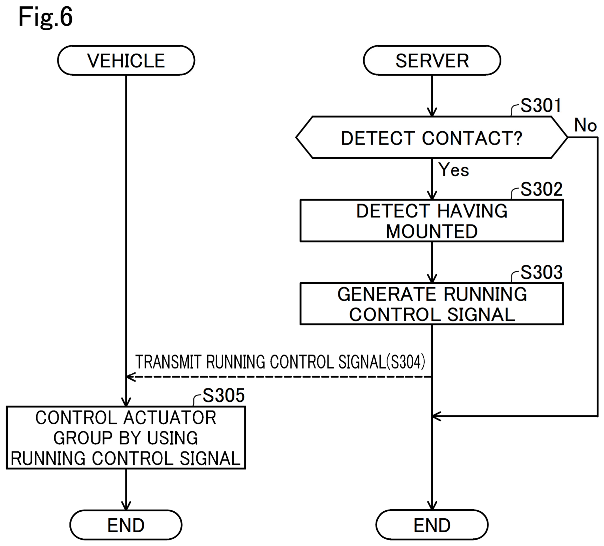

Fig. 6 is a flowchart showing a control method according to the third embodiment. The flow shown in Fig. 6 is repeatedly performed in a predetermined time cycle from a moment when the vehicle 100 starts running by unmanned driving, for example. If contact between the vehicle 100 and the particular step ST is detected (step S301: Yes), the detection unit 212 of the server 200 detects in step S302 that the vehicle 100 has mounted the particular step ST. If the detection unit 212 detects that the vehicle 100 has mounted the particular step ST, the remote controller 213 of the server 200 generates a running control signal in step S303 for evacuating the vehicle 100 from over the particular step ST. In step S304, the remote controller 213 transmits the generated running control signal to the vehicle 100. In step S305, the vehicle controller 115 of the vehicle 100 controls the actuator group 120 by using the received running control signal, thereby operating the vehicle 100.

According to the above third embodiment, if the control system 50 detects that the vehicle 100 has mounted the particular step ST, the control system 50 is capable of controlling the vehicle 100 by remote control in such a way as to evacuate the vehicle 100 from over the particular step ST. This configuration allows the vehicle 100 to be evacuated from over the particular step ST.

According to the above third embodiment, the control system 50 is capable of evacuating the vehicle 100 from over the particular step ST by causing the vehicle 100 to pass over the particular step ST or by moving the vehicle 100 forward or backward to return the vehicle 100 to a location before the mounting, for example.

### D. Fourth Embodiment:

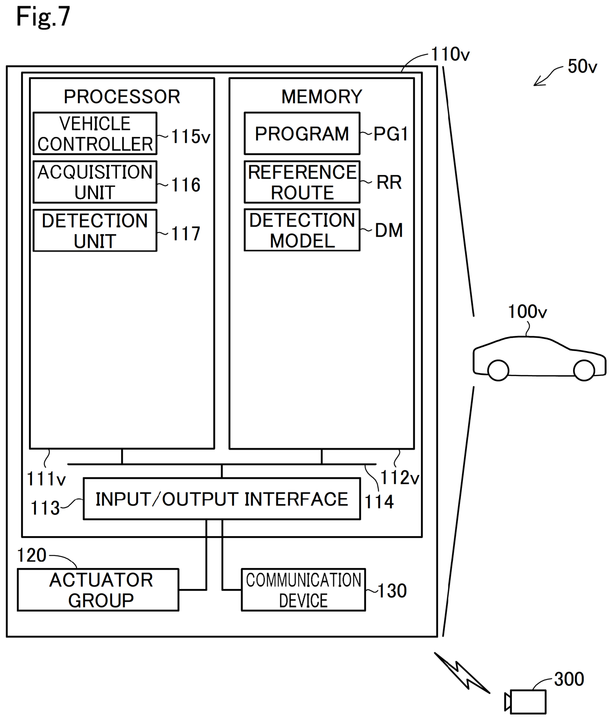

Fig. 7 is an explanatory view showing a schematic configuration of a control system 50v according to a fourth embodiment. In the present embodiment, the control system 50v differs from that of the first embodiment in that it does not include the server 200. A vehicle 100v of the present embodiment is capable of running by autonomous control from the vehicle 100v. Unless otherwise specified, other configurations are the same as those of the first embodiment.

In the present embodiment, a processor 111v of a vehicle control device 110v executes a program PG1 stored in a memory 112v to function as a vehicle controller 115v, an acquisition unit 116, and a detection unit 117. The acquisition unit 116 acquires various types of information including step information. Using the step information, the detection unit 117 detects the presence of the particular step ST at a destination of travel of the vehicle 100v. The detection unit 117 may detect that the vehicle 100v has mounted the particular step ST by using detection result from an internal sensor, for example. The vehicle controller 115v allows the vehicle 100v to run by autonomous control by acquiring output result from the sensor, generating a running control signal by using the output result, and outputting the generated running control signal to operate the actuator group 120. In the present embodiment, in addition to the program PG1, the memory 112v contains a detection model DM and a reference route RR stored in advance therein. If the detection unit 117 detects the presence of the particular step ST at a destination of travel of the vehicle 100v in a period when autonomous control is performed in this way, the vehicle controller 115v controls the vehicle 100v in such a way as to reduce a likelihood of the vehicle 100v mounting the particular step ST. If the detection unit 117 detects that the vehicle 100v has mounted the particular step ST, the vehicle controller 115v may control the vehicle 100v in such a way as to evacuate the vehicle 100v from the particular step ST.

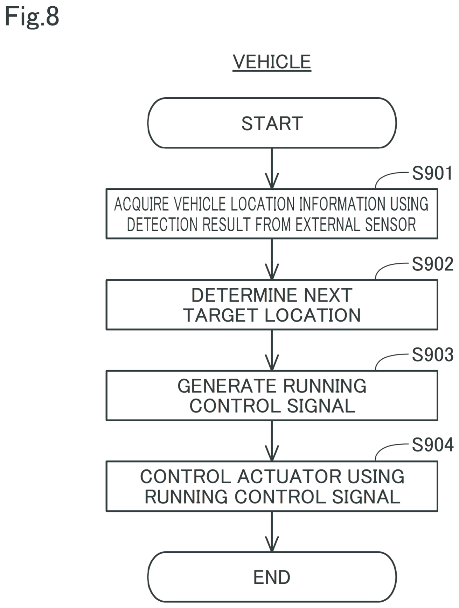

Fig. 8 is a flowchart showing a processing procedure of running control over the vehicle 100v according to the fourth embodiment. In step S901, the processor 111v of the vehicle control device 110v acquires vehicle location information using detection result output from the camera as the external sensor 300. In step S902, the processor 111v determines a target location to which the vehicle 100v is to move next. In step S903, the processor 111v generates a running control signal for causing the vehicle 100 to run to the determined target location. In step S904, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator group 120 in a predetermined cycle. According to the control system 50v in the present embodiment, it is possible to cause the vehicle 100v to run by autonomous control without controlling the vehicle 100v remotely using the server 200.

According to the above fourth embodiment, if the control system 50v detects the presence of the particular step ST at a destination of travel of the vehicle 100v, the control system 50v is capable of controlling the vehicle 100v by autonomous control from the vehicle 100v in such a way as to reduce a likelihood of the vehicle 100v mounting the particular step ST.

According to the above fourth embodiment, if the control system 50v detects that the vehicle 100v has mounted the particular step ST, the control system 50v is capable of controlling the vehicle 100v by autonomous control from the vehicle 100v in such a way as to evacuate the vehicle 100v from over the particular step ST.

### E. Other Embodiments

(E1) If the control system 50, 50v detects that the vehicle 100, 100v has mounted the particular step ST, the control system 50, 50v may notify the worker P of error information via a notification device not shown in the drawings. The control system 50, 50v may notify the worker P of an operating state of the vehicle 100, 100v via the notification device. The control system 50, 50v notifies the worker P by causing a hazard lamp mounted on the vehicle 100, 100v to flash or by blowing a horn mounted on the vehicle 100, 100v, for example. The control system 50, 50v may notify the worker P by playing audio information from a speaker installed in the factory FC. Such a configuration allows the worker P to recognize the operating state of the vehicle 100, 100v promptly. As a result, it is possible to enhance the safety of the worker P. Furthermore, as the worker P is allowed to immediately handle a situation where the vehicle 100, 100v has mounted the particular step ST, it is possible to avoid delay in the production of the vehicle 100, 100v.

(E2) The control system 50, 50v may make a difference in a way of controlling the vehicle 100, 100v in response to characteristics of each manufacturing process. For example, if the vehicle 100, 100v is to run on a conveyance facility such as a conveyor, increase in a deceleration of the vehicle 100, 100v on the conveyance facility may increase load applied to the conveyance facility. In response to this, if the vehicle 100, 100v is to run on the conveyance facility, the control system 50, 50v may set the absolute value of a deceleration of the vehicle 100, 100v to a smaller value. This configuration makes it possible to reduce a likelihood of damage or failure of the conveyance facility, for example.

(E3) The control system 50, 50v may make a difference in a way of controlling the vehicle 100, 100v in response to a situation where the particular step ST is detected. As an example, if contact with the particular step ST is predictable before the contact occurs, the absolute value of a deceleration of the vehicle 100, 100v may be set to a small value in order to decelerate the vehicle 100, 100v gently. As another example, if contact with the particular step ST is predictable only after the contact occurs, the absolute value of a deceleration of the vehicle 100, 100v may be set to a large value in order to stop the vehicle 100, 100v readily. This configuration makes it possible to control the vehicle 100, 100v favorably in response to a situation where the particular step ST is detected.

(E4) The control system 50, 50v may be used in a place other than the factory FC where the vehicle 100, 100v is manufactured. Specifically, the control system 50, 50v may control the vehicle 100, 100v after being shipped. If the control system 50, 50v is used in a place other than the factory FC, the expression "manufacture" in the present disclosure may be replaced with "work," as appropriate. This configuration makes it possible to reduce a likelihood of the vehicle 100, 100v mounting the particular step ST also in a work place that may be an urban area or a vehicle inspection center other than the factory FC.

(E5) In each of the above embodiments, the external sensor 300 is not limited to a camera but may be a distance measuring unit, for example. The distance measuring unit is a light detection and ranging (LiDAR) unit, for example. In this case, detection result output from the external sensor 300 may be three-dimensional point cloud data representing the vehicle 100, 100v. In this case, the server 200 or the vehicle 100, 100v may acquire vehicle location information by performing template matching between the three-dimensional point cloud data as the detection result and reference point cloud data prepared in advance.

(E6) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(E7) In the above fourth embodiment, the vehicle 100v is mounted with the internal sensor, and detection result output from the internal sensor may be used in at least one of generation of a route and generation of a running control signal. For example, the vehicle 100v may acquire detection result from the internal sensor, and in generating a route, may reflect the detection result from the internal sensor in the route. The vehicle 100v may acquire detection result from the internal sensor, and in generating a running control signal, may reflect the detection result from the internal sensor in the running control signal.

(E8) In the above-described fourth embodiment, the vehicle 100v acquires vehicle location information using detection result from the external sensor 300. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 of the vehicle 100v using the generated running control signal. In this case, the vehicle 100v is capable of running without using any detection result from the external sensor 300. The vehicle 100v may acquire target arrival time or traffic congestion information from outside the vehicle 100v and reflect the target arrival time or traffic congestion information in at least one of the route and the running control signal. The functional configuration of the control system 50 may be entirely provided at the vehicle 100v. Specifically, the processes realized by the control system 50 in the present disclosure may be realized by the vehicle 100v alone.

(E9) In each of the embodiment from first embodiment to the third embodiment described above, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(E10) In each of the above-described embodiments, the vehicle 100,100v is simply required to have a configuration to become movable by unmanned driving. The vehicle 100,100v may embodied as a platform having the following configuration, for example. The vehicle 100,100v is simply required to include at least the vehicle control device 110,110v and actuator group 120 in order to fulfill three functions including "run," "turn," and "stop" by unmanned driving. In order for the vehicle 100,100v to acquire information from outside for unmanned driving, the vehicle 100,100v is simply required to include the communication device 130 further. Specifically, the vehicle 100,100v to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100,100v before the vehicle 100,100v is shipped from a factory, or a remaining component such as a bodyshell may be mounted on the vehicle 100,100v after the vehicle 100,100v is shipped from the factory FC while the remaining component such as a bodyshell is not mounted on the vehicle 100,100v. Each of components may be mounted on the vehicle 100,100v from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(E11) The vehicle 100,100v may be manufactured by combining a plurality of modules. The module means a unit composed of one or more components grouped according to a configuration or function of the vehicle 100, 100v. For example, a platform of the vehicle 100,100v may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100,100v different from the platform may be modularized. Various modules may include an arbitrary exterior component such as a bumper or a grill, or an arbitrary interior component such as a seat or a console. Not only the vehicle 100,100v but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(E12) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(E13) In each of the above embodiments, the detection unit 212 may detect that the vehicle 100 has come into contact with the particular step ST by the following method. Specifically, if a drive torque requested for the motor for running as a power source exceeds a predetermined value during running of the vehicle 100, the detection unit 212 may detect that the vehicle 100 has come into contact with the particular step ST. If the requested drive torque exceeds the predetermined value while the vehicle 100 is running steadily on the track TR in the factory FC at an extremely low speed of equal to or less than 10 km per hour, for example, the detection unit 212 detects that the vehicle 100 has come into contact with the particular step ST. During steady-state running at an extremely low speed, the requested drive torque is determined based on rotational speed feedback from the engine or motor powering vehicle 100 and disturbance estimation. Here, when vehicle 100 contacts the particular step ST, the requested drive torque increases as vehicle speed decreases. If the vehicle 100 is a four-wheel drive vehicle, the requested drive torque corresponds to a total of a requested drive torque for the front wheels and a requested drive torque for the rear wheels. In a particular case where the contact of the vehicle 100 with the particular step ST is detected, the remote controller 213 may control the vehicle 100 in such a way as to evacuate the vehicle 100 from the particular step ST like in the third embodiment. In the particular case, the controller 213 may set the requested drive torque zero and may operate the vehicle 100 in such a way as to stop the vehicle 100.

In the above case where the vehicle 100 is a four-wheel drive vehicle, even if the vehicle 100 is scheduled to run by transmitting a torque of the motor for running to only either the front wheels or the rear wheels as drive wheels, the controller 213 may perform particular torque control by which a torque equal to or less than a predetermined value greater than zero is still transmitted to the other wheels. The predetermined value may be less than the torque for the drive wheels, for example. A power transmission system of a wheel not used as a drive wheel has gear backlash or play in a spring element of a shaft (motion clearance). Thus, if the wheel not used as a drive wheel comes into contact with the particular step ST (the safety shoe of the worker P, for example), gear backlash or play in the spring element of the shaft may prevent smooth transmission of power, causing a likelihood of reduction in responsiveness of the requested drive torque. This might cause delay in detecting the contact of the vehicle 100 with the particular step ST. By causing the controller 213 to perform the particular torque control, it becomes possible for the detection unit 212 to detect with high accuracy that the front wheel has come into contact with the particular step ST and that the rear wheel has come into contact with the particular step ST.

The present disclosure is not limited to the embodiments described above and is able to be realized with various configurations without departing from the spirit thereof. For example, technical features in the embodiments corresponding to the technical features in the aspects described in the section of SUMMARY are able to be replaced with each other or combined together, as appropriate, in order to solve part or the whole of the problems described above or to achieve part or the whole of the effects described above. When the technical features are not described as essential features in the present specification, they are able to be deleted, as appropriate.

## Claims

1. A control system (50;50v) that controls a vehicle (100;100v) capable of running by unmanned driving, comprising:
an acquisition unit (116;211) that acquires step information about a particular step that is a step among steps present on a running route of the vehicle (100;100v) and determined in advance as a step which the vehicle (100;100v) is not to mount;
a detection unit (117;212) that detects the presence of the particular step at a destination of travel of the vehicle (100;100v) by using the step information; and
a controller (115v;213) that controls the vehicle in such a way as to reduce a likelihood of the vehicle (100;100v) mounting the particular step if the detection unit detects the presence of the particular step at a destination of travel of the vehicle.

2. The control system (50;50v) according to claim 1, wherein
the controller (115v;213) performs at least one of:
(i) controlling of a steering angle of the vehicle (100;100v) in such a way as to cause the vehicle (100;100v) to run without mounted the particular step if the particular step is a step generated by a stationary item defining a course of the vehicle (100;100v);
(ii) controlling of an acceleration of the vehicle (100;100v) in such a way as to stop the vehicle (100;100v) in front of the particular step if the particular step is a step generated by a stationary item defining a stop location of the vehicle (100;100v); and
(iii) controlling of at least one of the steering angle of the vehicle (100;100v) and the acceleration of the vehicle (100;100v) in such a way as to avoid contact of the vehicle (100;100v) with the particular step if the particular step is a step generated by a moving item present around the vehicle (100;100v).

3. The control system (50;50v) according to claim 1, wherein
the step information includes item location information indicating the location of an item generating the particular step,
the acquisition unit (116;211) further acquires vehicle location information indicating the location of the vehicle (100;100v), and
if a distance between the item and the vehicle (100;100v) identified by using the item location information and the vehicle location information is within a predetermined distance, the detection unit detects the presence of the particular step at a destination of travel of the vehicle (100;100v).

4. The control system according to claim 1, wherein
the particular step is a step generated by a stationary item installed in a work place where a working process is performed onto the vehicle,
the step information includes step process information indicating the working process to be performed in the work place where the particular step is present,
the acquisition unit (116;211) further acquires implemented process information indicating the working process being performed onto the vehicle (100;100v), and
if the working process identified from the implemented process information agrees with the working process identified from the step process information, the detection unit (117;212) detects the presence of the particular step at a destination of travel of the vehicle (100;100v).

5. The control system (50;50v) according to any one of claims 1 to 4, wherein
the detection unit (117;212) further detects that the vehicle (100;100v) has mounted the particular step, and
if the detection unit (117;212) detects that the vehicle (100;100v) has mounted the particular step, the controller controls the vehicle (100;100v) in such a way as to evacuate the vehicle (100;100v) from over the particular step.
